# EUROPEAN PATENT SPECIFICATION

(11) **EP 2 070 452 B1**
(45) Date of publication and mention of the grant of the patent: **03.03.2010**
(21) Application number: 08165840.3
(22) Date of filing: 03.10.2008
(51) Int. Cl.: A47J 31/36

(54) **Infusion unit**
Infusionseinheit
Unité d'infusion

(30) Priority: 11.12.2007 IT BS20070194
(43) Date of publication of application: 17.06.2009
(73) Proprietor: Capitani S.r.l., 22070 Solbiate (CO) (IT)
(72) Inventor: Capitani, Emilio, 22070 Albiolo, Como (IT)
(74) Representative: Pulieri, Gianluca Antonio

(56) References cited:
- EP-A- 1 219 217
- EP-A- 1 757 212
- EP-A- 1 859 714
- WO-A-2005/058111
- WO-A-2008/093232

## Description

This invention is related to an infusion unit, for example for coffee machines functioning with pods or capsules containing aromatic essences.

A variety infusion units for coffee machines are known in the art. These devices usually comprise a male infuser supplying an extraction fluid, and a female infuser.

The pod containing the aromatic essence have to be moved into the female infuser, into the so-called infusion chamber, in order to allow extraction of the aromatic essence by means of the male infuser.

To this end the devices of the state of the art include receiving and moving means of the pod for correct reception, alignment and insertion into the infusion chamber, and for its expulsion from the latter after the beverage delivery has been completed. These means are usually associated to the frame of the infusion unit and require perfect positioning of the male and female infuser. These means are relatively complex in structure and include elastic devices that must be very precise and that with time, after repeated use of the machine, tend to wear out, losing their initial setting and getting blocked. Document EP-1859714 discloses an infusion unit according to the preamble of claim 1.

Therefore, the present invention sets out to solve at least a partially the mentioned drawbacks of the prior art devices.

This aim is achieved through an infusion unit according to claim 1.

Further advantages may be achieved through the supplemental features of the dependent claims.

The object of the present invention will now be described in detail, with the aid of the attached figures, wherein:

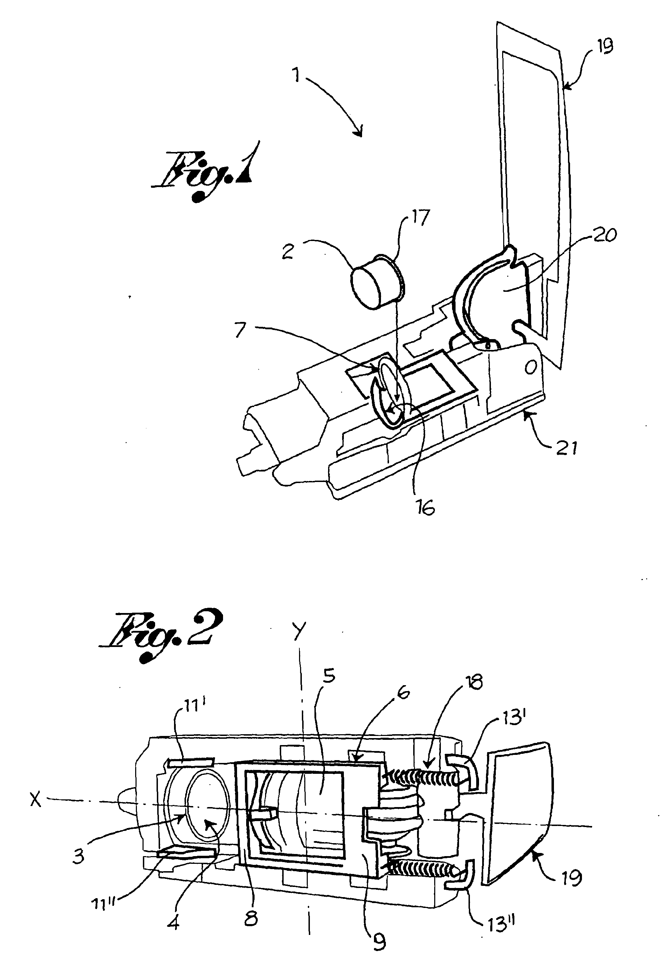

- figures 1 and 2 show two perspective views of an infusion unit according to a possible embodiment;

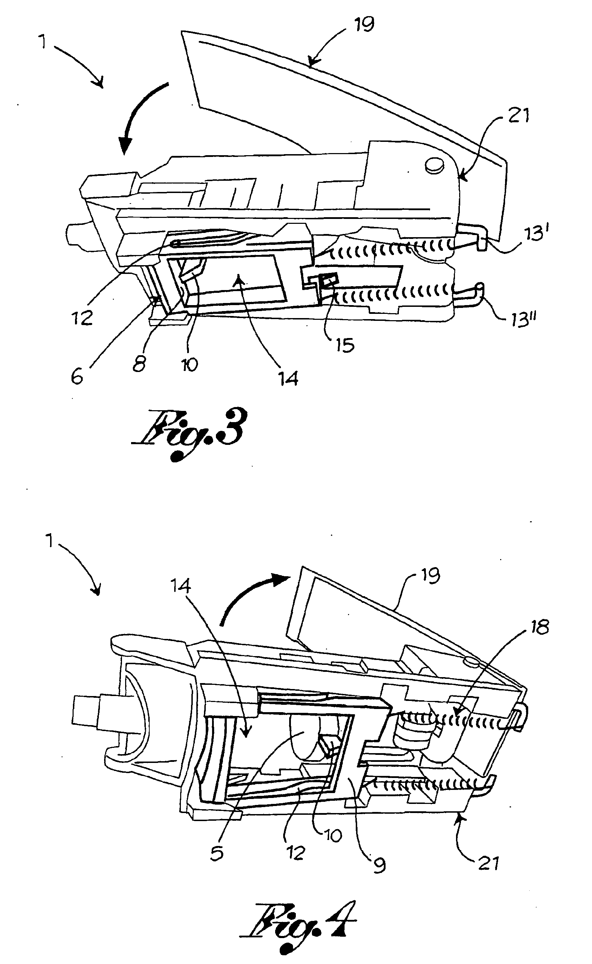

- figures 3 and 4 illustrate the device of figure 1 according to subsequent functioning steps.

With reference to the mentioned figures, the reference number 1 globally indicates an infusion unit, e. g. for coffee machines of the type functioning with pods or capsules 2 containing aromatic essences.

The infusion unit 1 comprises a female infuser 3, defining an infusion chamber suitable for housing a pod 2 for the production of an infused beverage, and a male infuser 5, suitable for cooperating with the female infuser 3 to close at least partially said chamber 4.

At least one between the male 5 and the female infuser 3 is movable with respect to the other along a translation axis X between a rear inactive position and a forward working position.

Preferably, the male infuser 5 is movable along the translation axis X.

According to a preferred embodiment, the female infuser 3 is in fluidic contact with a conduit for channelling an infused beverage to a cup.

Preferably, the infusion unit 1 further comprises a frame 21 operatively connected to the male 5 and the female infuser 3.

The infusion unit 1 further comprises housing and movement means for the pod 2.

In particular, the above housing and movement means comprise a sliding element 6.

The sliding element 6 has a seating 7 suitable for the introduction of the pod 2 and movable between a rear position for inserting the pod 2 in the seating 7 and a forward position for releasing pod 2 into the infusion chamber 4, wherein the seating 7 is deviated from the translation axis X to allow releasing of the pod 2.

In other words, the sliding element 6 functions as a conveyor for pod 2 from the insertion position to the infusion chamber. Moreover, joined with the infusion chamber, the seating deviates from translation axis X, for example by dropping, to permit release of the pod.

The infusion unit 1 further comprises locking means for the sliding element in the forward position and for delaying the return of sliding element 6 towards the rear position with regard to opening of the infusion chamber.

According to a preferred embodiment, seating 7 comprises two walls, parallel to each other and orthogonal to the translation axis X, that delimit a recess 16 suitable for being engaged by an engagement portion 17 of the pod 2.

According to a preferred embodiment, the movement of the sliding element 6 is produced by male infuser 5.

In other words, the movement of male infuser 5 towards the forward position, and that of the sliding element 6 towards the forward release position, take place simultaneously.

In one preferred embodiment, the male infuser 5 and the sliding element 6 are moved independently.

According to another variation, the male infuser 5 comprises engagement means suitable for engaging a front portion 8 of the sliding element 6 to move it towards the forward release position.

According to yet another variation, the infusion unit 1 further comprises an actuator 19, comprising a push cam 20 for pushing the male infuser 5 towards the forward position.

For example, the actuator 19 is manually operable.

Preferably, the actuator 19 engages the male infuser 5 by interposition of a roller bearing, integral in translation with male infuser 5.

According to a further variation, the return of male 5 or female infuser towards the rear position anticipates that of the sliding element 6 towards the rear insertion position.

In other words, when male infuser 5 moves towards the rear inactive position, the sliding element 6 remains for a predetermined time in the forward release position in such a way as to permit ejection of the used pod. This procedure will be explained in detail below.

Preferably, the locking means comprise a first tooth 15 suitable for engaging the sliding element 6 when the latter is in the forward release position.

For example, the first tooth 15 may be positioned on the frame 21 described above.

According to a preferred variation, the male infuser 5 also comprises disengagement means suitable for cooperating with a rear portion 9 of the sliding element 6 to allow its return to the rear insertion position.

Hence, preferably, the forward portion 8 and rear portion 9 are reciprocally distanced in order to define the delay of the sliding element 6 in respect of the male infuser 5.

According to a possible variation, the disengagement means are suitable for distancing the rear portion 9 from translation axis X and its subsequent disengagement from the first tooth 15.

Preferably, the engagement and disengagement means comprise a second tooth 10 extending substantially transversally with regard to the translation axis X.

Even more preferably, the second tooth 10 has a cam-shaped profile suitable for distancing the rear portion 9 from the translation axis X and its disengagement from the first tooth 15.

According to a possible embodiment, the infusion unit also comprises cam means 11', 11" suitable for deviating the seating 7 from the translation axis X.

According to a further embodiment, the sliding element 6 is mounted on a frame 21 with the possibility of translating along the translation axis X and of oscillating with regard to an oscillation axis Y orthogonal to the axis X.

According to a possible variation, the frame 21 comprises a pair of oscillation pins positioned along the oscillation axis Y, while the sliding element 6 comprises a pair of guide slots suitable for engaging said oscillation pins. This way, the oscillation pins are free to translate along said guide slots 12.

According to a further variation, the guide slots 12 have an inclined portion suitable for allowing oscillation of the front portion 8 of the sliding element 6.

Preferably, the infusion unit further comprises return means 18, e. g. at least a spring, suitable for bringing the sliding element 6 into the rear insertion position.

According to a further variation, the frame 21 comprises hooking means 13', 13" for hooking the return means 18.

Preferably, the sliding element 6 comprises a through opening 14 suitable for allowing the passage by gravity of a used pod 2.

Innovatively, the infusion unit described herein is of simple construction and therefore guarantees high reliability degree and reproducibility of the pod insertion into the infusion chamber.

Hence, advantageously, the infusion unit of the present invention can be produced on a large scale with reduced manufacturing costs.

A further advantage is that the infusion unit of the present invention requires little maintenance, thanks to the absence of delicate components which would call for periodic fine-tuning and adjustment.

In order to meet contingent requirements a person skilled in the art can carry out modifications and adaptations, replacing certain elements of the infusion unit described above with other functionally equivalent, without going beyond the context of the following claims. Each of the features described as belonging to a possible embodiment may be realized independently from the other embodiments described.

## Claims

1. Infusion unit (1), e.g. for coffee machines functioning with pods or capsules (2) containing aromatic essences, comprising:
- a female infuser (3) defining an infusion chamber (4) suitable for housing a pod (2) for the production of an infused beverage;
- a male infuser (5) suitable for cooperating with the female infuser (3) to close at least partially said chamber (4);
wherein at least one of said male (5) and female infuser (3) is movable with respect to the other along a translation axis (X) between a rear inactive position and a forward working position; and
- housing and movement means for the pod (2),
**characterised in that** said housing and movement means comprise a sliding element (6) having a seating (7) suitable for the introduction of the pod (2) and movable between a rear insertion position of the pod (2) in the seating (7) and a forward release position of the pod (2) into the infusion chamber (4), wherein the seating (7) is deviated from the translation axis (X) to allow release of the pod (2), and **in that** it further comprises locking means of the sliding element in the forward position, suitable for delaying the return of the sliding element (6) towards the rear position in relation to the opening of the infusion chamber.

2. Infusion unit (1) according to claim 1, wherein the return of the male (5) or female infuser towards the rear position anticipates that of the sliding element (6) towards the rear insertion position.

3. Infusion unit (1) according to claim 1 or 2, wherein the movement of the male infuser (5) towards the forward position and that of the sliding element (6) towards the forward release position happen simultaneously.

4. Infusion unit (1) according to one of the previous claims, wherein the male infuser (5) comprises engagement means for engaging a front portion (8) of the sliding element (6) to move it towards the forward release position.

5. Infusion unit (1) according to one of the previous claims, wherein the locking means comprise a first tooth (15) suitable for engaging the sliding element (6) when the latter is in the forward release position.

6. Infusion unit (1) according to one of the previous claims, wherein the male infuser (5) further comprises disengagement means suitable for cooperating with a rear portion (9) of the sliding element (6) to allow its return to the rear insertion position.

7. Infusion unit (1) according to claim 6, wherein the disengagement means are suitable for distancing the rear portion (9) from the translation axis (X) and its disengagement from the first tooth (15).

8. Infusion unit (1) according to one of claims 4, 8 or 9, wherein the engagement and/or disengagement means comprise a second tooth (10) extending substantially transversally from the translation axis (X) and having a cam-shaped profile suitable for distancing the rear portion (9) from the translation axis (X) and its disengagement from the first tooth (15).

9. Infusion unit (1) according to one of the previous claims, further comprising cam means (11', 11") suitable for deviating the seating (7) from the translation axis (X).

10. Infusion unit (1) according to one of the previous claims, wherein the sliding element (6) is mounted on a frame (21) with the possibility of translating along the translation axis (X) and of oscillating with regard to an oscillation axis (Y) orthogonal to the axis (X).

11. Infusion unit (1) according to claim 10, wherein:
- the frame (21) comprises a pair of oscillation pins positioned along the oscillation axis (Y); and
- the sliding element (6) comprises a pair of guide slots (12) suitable for being engaged from said oscillation pins; so that the pins are free to translate along said guide slots (12).

12. Infusion unit (1) according to claim 11, wherein the guide slots (12) have an inclined portion suitable for allowing oscillation of the front portion (8) of the sliding element (6).

13. Infusion unit (1) according to claims 4 and 6, wherein the front (8) and rear portion (9) are reciprocally distanced in order to define the delay of the sliding element (6) with regard to the male infuser (5).

14. Infusion unit (1) according to one of the previous claims, comprising return means (18) suitable for bringing the sliding element (6) to the rear insertion position.

15. Infusion unit (1) according to one of the previous claims, wherein the sliding element (6) comprises a through opening (14) suitable for allowing the passage by gravity of a used pod (2).

16. Infusion unit (1) according to one of the previous claims, wherein the seating (7) comprises two walls, parallel to each other and orthogonal to the translation axis (X), delimiting a recess (16) suitable for being engaged by an engagement portion (17) of the pod (2).

17. Infusion unit (1) according to one of the previous claims, further comprising an actuator (19) comprising a push cam (20) for pushing the male infuser (5) towards the forward position.

18. Infusion unit (1) according to claim 17, wherein the actuator (19) engages the male infuser (5) by interposition of a roller bearing, integral in translation with the male infuser (5).

## Patentansprüche

1. Infusions- bzw. Aufgusseinheit (1), z.B. für eine Kaffeemaschine, die mit Pads bzw. Hülsen oder Kapseln (2) arbeitet, welche aromatische Essenzen bzw. Extrakte enthalten, die umfasst:
- eine aufnehmende Aufgusseinrichtung (3), die eine Aufgusskammer (4) definiert, die geeignet ist, ein Pad (2) für die Herstellung eines Aufgussgetränks aufzunehmen;
- eine aufzunehmende Aufgusseinrichtung (5), die geeignet ist, mit der aufnehmenden Aufgusseinrichtung (3) zusammen zu wirken, um die Kammer (4) wenigstens teilweise zu verschließen;
wobei die aufzunehmende (5) und/oder aufnehmende (3) Aufgusseinrichtung in Bezug auf die andere entlang einer Verschiebungsachse (X) zwischen einer hinteren inaktiven Position und einer vorderen Arbeitsposition beweglich ist; und
- Unterbringungs- und Bewegungsmittel für das Pad (2),
**dadurch gekennzeichnet, dass** die Unterbringungs- und Bewegungsmittel ein Verschiebeelement (6) mit einer Auflagefläche (7) umfassen, die für die Einführung des Pads (2) geeignet ist und zwischen einer hinteren Einsetzposition des Pads (2) in die Aufnahmefläche (7) und einer vorderen Freigabeposition des Pads (2) in die Aufgusskammer (4) beweglich ist, wobei die Auflagefläche (7) von der Verschiebungsachse (X) abgelenkt wird, um die Freigabe des Pads (2) zuzulassen, und dadurch, dass sie ferner Sperrmittel des Verschiebungselements in der vorderen Position aufweisen, die geeignet sind, die Rückkehr des Verschiebungselements (6) in Richtung der hinteren Position in Bezug auf die Öffnung der Aufgusskammer zu verzögern.

2. Aufgusseinheit (1) nach Anspruch 1, wobei die Rückkehr (5) der aufzunehmenden (5) oder aufnehmenden Aufgusseinrichtung in Richtung der hinteren Position der des Verschiebungselements (6) in Richtung der hinteren Einsetzposition vorausgeht.

3. Aufgusseinheit (1) nach Anspruch 1 oder 2, wobei die Bewegung der aufzunehmenden Aufgusseinrichtung (5) in Richtung der vorderen Position und die des Verschiebungselements (6) in Richtung der vorderen Freigabeposition gleichzeitig stattfinden.

4. Aufgusseinheit (1) nach einem der vorhergehenden Ansprüche, wobei die aufzunehmende Aufgusseinrichtung (5) Eingreifmittel zum Eingreifen in einen vorderen Abschnitt (8) des Verschiebungselements (6) umfasst, um es in Richtung der vorderen Freigabeposition zu bewegen.

5. Aufgusseinheit nach einem der vorhergehenden Ansprüche, wobei die Sperrmittel einen ersten Zahn (15) umfassen, der geeignet ist, um in das Verschiebungselement (6) einzugreifen, wenn das letztere in der vorderen Freigabeposition ist.

6. Aufgusseinheit (1) nach einem der vorhergehenden Ansprüche, wobei die aufzunehmende Aufgusseinrichtung (5) ferner Lösemittel umfasst, die geeignet sind, mit einem hinteren Abschnitt (9) des Verschiebungselements (6) zusammen zu wirken, um seine Rückkehr zu der hinteren Einsetzposition zuzulassen.

7. Aufgusseinheit (1) nach Anspruch 6, wobei die aufzunehmende Aufgusseinheit (5) ferner Lösemittel umfasst, die geeignet sind, den hinteren Abschnitt (9) von der Verschiebungsachse (X) abzusetzen und ihn von dem ersten Zahn (15) zu lösen.

8. Aufgusseinheit (1) nach einem der Ansprüche 4, 8 oder 9, wobei die Eingreif- und/oder Lösungsmittel einen zweiten Zahn (10) umfassen, der sich im Wesentlichen quer von der Verschiebungsachse (X) erstreckt und ein nockenförmiges Profil hat, das geeignet ist, den hinteren Abschnitt (9) von der Verschiebungsachse (X) abzusetzen und von dem ersten Zahn (15) zu lösen.

9. Aufgusseinheit (1) nach einem der vorhergehenden Ansprüche, die ferner Nockenmittel (11', 11") umfasst, die geeignet sind, die Auflagefläche (7) von der Verschiebungsachse (X) abzulenken.

10. Aufgusseinheit (1) nach einem der vorhergehenden Ansprüche, wobei das Verschiebungselement (6) auf einen Rahmen (21) montiert ist, mit der Möglichkeit, entlang der Verschiebungsachse (X) verschoben zu werden und in Bezug auf eine Schwingungsachse (Y) senkrecht zu der Achse (X) zu schwingen.

11. Aufgusseinheit (1) nach Anspruch 10, wobei:
- der Rahmen (21) ein Paar Schwingungsstifte umfasst, die entlang der Schwingungsachse (Y) positioniert sind; und
- das Verschiebungselement (6) ein Paar Führungsschlitze (12) umfasst, die geeignet sind, von den Schwingungsstiften gegriffen zu werden;
so dass die Stifte frei sind, entlang der Führungsschlitze (12) verschoben zu werden.

12. Aufgusseinheit (1) nach Anspruch 11, wobei die Führungsschlitze (12) einen geneigten Abschnitt haben, der geeignet ist, um die Schwingung des vorderen Abschnitts (8) des Verschiebungselements (6) zu erlauben.

13. Aufgusseinheit (1) nach einem der der Ansprüche 4 und 6, wobei der vordere (8) und der hintere Abschnitt (9) gegenseitig beabstandet sind, um die Verzögerung des Verschiebungselements (6) in Bezug auf die aufzunehmende Aufgusseinrichtung (5) zu definieren.

14. Aufgusseinheit (1) nach einem der vorhergehenden Ansprüche, die Rückkehrmittel (18) umfasst, die geeignet sind, um das Verschiebungselement (6) zu der hinteren Einsetzposition zu bringen.

15. Aufgusseinheit (1) nach einem der vorhergehenden Ansprüche, wobei das Verschiebungselement (6) eine Durchgangsöffnung (14) umfasst, die geeignet ist, um den Durchtritt eines gebrauchten Pads (2) durch die Schwerkraft zuzulassen.

16. Aufgusseinheit (1) nach einem der vorhergehenden Ansprüche, wobei die Auflagefläche (7) zwei Wände umfasst, die parallel zueinander und senkrecht zu der Verschiebungsachse (X) sind, die eine Aussparung (16) begrenzen, die für einen Eingriff durch einen Eingreifabschnitt (17) des Pads (2) geeignet ist.

17. Aufgusseinheit (1) nach einem der vorhergehenden Ansprüche, die ferner einen Aktuator (19) umfasst, der eine Drucknocke (20) zum Drücken der aufzunehmenden Aufgusseinrichtung in Richtung der vorderen Position umfasst.

18. Aufgusseinheit (1) nach Anspruch 17, wobei der Aktuator (19) durch Einschalten eines Kugellagers, das bei der Verschiebung integral mit der aufzunehmenden Aufgusseinrichtung (5) ist, in die aufzunehmende Aufgusseinrichtung (5) eingreift.

## Revendications

1. Unité d'infusion (1), par exemple pour machines à café fonctionnant avec des dosettes ou capsules (2) contenant des essences aromatiques, comprenant:
- un dispositif d'infusion femelle (3) définissant une chambre d'infusion (4) appropriée pour loger une dosette (2) destinée à la production d'une boisson infusée;
- un dispositif d'infusion mâle (5) approprié pour coopérer avec le dispositif d'infusion femelle (3) afin de fermer au moins partiellement ladite chambre (4);
dans laquelle au moins l'un desdits dispositifs d'infusion mâle (5) et femelle (3) est mobile par rapport à l'autre le long d'un axe de translation (X) entre une position arrière inactive et une position avant de travail; et
- des moyens de réception et de mouvement pour la dosette (2),
**caractérisée en ce que** lesdits moyens de réception et de mouvement comprennent un élément coulissant (6) ayant un siège (7) approprié pour l'introduction de la dosette (2) et mobile entre une position d'insertion arrière de la dosette (2) dans le siège (7) et une position de libération avant de la dosette (2) dans la chambre d'infusion (4), dans laquelle le siège (7) est dévié de l'axe de translation (X) pour permettre la libération de la dosette (2), et **en ce qu'**elle comprend en outre des moyens de verrouillage de l'élément coulissant dans la position avant, appropriés pour retarder le retour de l'élément coulissant (6) vers la position arrière en relation avec l'ouverture de la chambre d'infusion.

2. Unité d'infusion (1) selon la revendication 1, dans laquelle le retour du dispositif d'infusion mâle (5) ou femelle vers la position arrière anticipe celui de l'élément coulissant (6) vers la position d'insertion arrière.

3. Unité d'infusion (1) selon la revendication 1 ou 2, dans laquelle le mouvement du dispositif d'infusion mâle (5) vers la position avant et celui de l'élément coulissant (6) vers la position de libération avant se font simultanément.

4. Unité d'infusion (1) selon l'une quelconque des revendications précédentes, dans laquelle le dispositif d'infusion mâle (5) comprend des moyens d'engagement pour engager une portion avant (8) de l'élément coulissant (6) pour le déplacer vers la position de libération avant.

5. Unité d'infusion (1) selon l'une quelconque des revendications précédentes, dans laquelle les moyens de verrouillage comprennent une première dent (15) appropriée pour engager l'élément coulissant (6) lorsque ce dernier se trouve en position de libération avant.

6. Unité d'infusion (1) selon l'une quelconque des revendications précédentes, dans laquelle le dispositif d'infusion mâle (5) comprend en outre des moyens de dégagement appropriés pour coopérer avec une portion arrière (9) de l'élément coulissant (6) pour en permettre le retour vers la position d'insertion arrière.

7. Unité d'infusion (1) selon la revendication 6, dans laquelle les moyens de dégagement sont appropriés pour éloigner la portion arrière (9) de l'axe de translation (X) et son dégagement de la première dent (15).

8. Unité d'infusion (1) selon l'une quelconque des revendications 4, 8 ou 9, dans laquelle les moyens d'engagement et/ou de dégagement comprennent une deuxième dent (10) s'étendant sensiblement transversalement depuis l'axe de translation (X) et ayant un profil en forme de came approprié pour éloigner la portion arrière (9) de l'axe de translation (X) et son dégagement de la première dent (15).

9. Unité d'infusion (1) selon l'une quelconque des revendications précédentes, comprenant en outre des moyens à came (11', 11") appropriés pour dévier le siège (7) de l'axe de translation (X).

10. Unité d'infusion (1) selon l'une quelconque des revendications précédentes, dans laquelle l'élément coulissant (6) est monté sur un châssis (21) avec la possibilité d'effectuer un mouvement de translation le long de l'axe de translation (X) et d'osciller par rapport à un axe d'oscillation (Y) orthogonal à l'axe (X).

11. Unité d'infusion (1) selon la revendication 10, dans laquelle:
- le châssis (21) comprend une paire de broches d'oscillation positionnées le long de l'axe d'oscillation (Y); et
- l'élément coulissant (6) comprend une paire de fentes de guidage (12) appropriées pour être engagées par les broches d'oscillation;
de sorte que les broches soient libres d'effectuer un mouvement de translation le long desdites fentes de guidage (12).

12. Unité d'infusion (1) selon la revendication 11, dans laquelle les fentes de guidage (12) ont une portion inclinée appropriée pour permettre l'oscillation de la portion avant (8) de l'élément coulissant (6).

13. Unité d'infusion (1) selon les revendications 4 et 6, dans laquelle les portions avant (8) et arrière (9) sont espacées mutuellement afin de définir le retard de l'élément coulissant (6) par rapport au dispositif d'infusion mâle (5).

14. Unité d'infusion (1) selon l'une quelconque des revendications précédentes, comprenant des moyens de retour (18) appropriés pour amener l'élément coulissant (6) vers la position d'insertion arrière.

15. Unité d'infusion (1) selon l'une quelconque des revendications précédentes, dans laquelle l'élément coulissant (6) comprend une ouverture traversante (14) appropriée pour permettre le passage par gravité d'une dosette usagée (2).

16. Unité d'infusion (1) selon l'une quelconque des revendications précédentes, dans laquelle le siège (7) comprend deux parois, parallèles l'une à l'autre et orthogonales à l'axe de translation (X), délimitant un évidement (16) approprié pour être engagé par une portion d'engagement (17) de la dosette (2).

17. Unité d'infusion (1) selon l'une quelconque des revendications précédentes, comprenant en outre un dispositif d'actionnement (19) comprenant une came poussoir (20) pour pousser le dispositif d'infusion mâle (5) vers la position avant.

18. Unité d'infusion (1) selon la revendication 17, dans laquelle le dispositif d'actionnement (19) engage le dispositif d'infusion mâle (5) par interposition d'un palier à roulement, solidaire en translation du dispositif d'infusion mâle (5).
